# EUROPEAN PATENT SPECIFICATION

(11) **EP 3 742 068 B1**
(45) Date of publication and mention of the grant of the patent: **01.01.2025**
(21) Application number: 18900855.0
(22) Date of filing: 17.01.2018
(51) Int. Cl.: F24F 11/46, F24F 11/49, F25B 13/00, F25B 49/00

(54) **METHOD FOR CONTROLLING AIR CONDITIONING APPARATUS, AND AIR CONDITIONING APPARATUS**
VERFAHREN ZUR STEUERUNG EINER KLIMAANLAGE UND KLIMAANLAGE
PROCÉDÉ DE COMMANDE D'APPAREIL DE CLIMATISATION, ET APPAREIL DE CLIMATISATION

(43) Date of publication of application: 25.11.2020
(73) Proprietor: Carrier Japan Corporation, Tokyo 141-0032 (JP)
(72) Inventor: IMATO, Naoki, Fuji-shi, Shizuoka 4168521 (JP); MIURA, Ken, Fuji-shi, Shizuoka 4168521 (JP); NAGAI, Hiroyuki, Fuji-shi, Shizuoka 4168521 (JP)
(74) Representative: Gramm, Lins & Partner Patent- und Rechtsanwälte PartGmbB
(86) International application number: PCT/JP2018/001241
(87) International publication number: WO 2019/142269

(56) References cited:
- JP-A- 2004 211 944
- JP-A- 2005 291 552
- JP-A- 2005 291 552
- JP-A- 2008 241 065
- JP-A- 2009 243 719
- JP-A- 2016 194 389
- JP-A- 2017 015 294
- JP-A- 2017 015 294
- US-A- 4 625 523
- US-A1- 2006 123 803

## Description

### TECHNICAL FIELD

Embodiments of the present invention relate to an air conditioning apparatus and its control method.

### BACKGROUND

In an air conditioning apparatus, oil used for lubricating a compressor of an outdoor unit is discharged from the compressor together with the refrigerant and further flows through the refrigerant pipe to the indoor units. This oil may stay inside the refrigerant pipe and may not return to the compressor in some cases. For this reason, an oil recovery operation for returning the oil to the compressor is performed. In such an oil recovery operation, expansion valves of all the indoor units including the stopped indoor unit(s) are opened, and the rotation speed of the compressor is increased as compared with the normal operation.
US 2006/123803 A1 discloses a method for controlling an air conditioner, in which operation time periods of an outdoor unit are integrated to determine a time point when an oil recovery operation is performed, and performing the oil recovery operation only when a summed rate or a number of indoor units accessed with communication is higher than a value preset at a control unit.

### PATENT DOCUMENT

[Patent Document 1] JP 2017-015294 A

### SUMMARY

### PROBLEMS TO BE SOLVED BY INVENTION

When the oil recovery operation is performed, noise is generated by the flow of the refrigerant from the stopped indoor unit(s), and thus the comfort of a user in the room is impaired. In particular, when noise is suddenly generated from a quietly stopped indoor unit, the noise becomes annoying. Hence, there is a demand to reduce the frequency of performing the oil recovery operation in which the stopped indoor unit(s) is/are used.

In view of the above-described circumstances, embodiments of the present invention aim to provide an air conditioning apparatus and its control method, each of which can reduce frequency of noise generation from the stopped indoor unit(s) during the oil recovery operation.

### MEANS FOR SOLVING PROBLEM

According to the present invention, a method for controlling an air conditioning apparatus comprises the steps of:
circulating a refrigerant between an outdoor unit and a plurality of indoor units via a refrigerant pipe, the plurality of indoor units including at least one non-operating indoor unit that is not in operation and at least one operating indoor unit that is in operation;
acquiring an operating state of each of the plurality of indoor units;
determining whether oil level of a compressor of the outdoor unit is decreased or not; and
determining, when the oil level of the compressor is determined to be decreased, whether (a) an oil recovery operation is performed by opening an expansion valve corresponding to only the at least one operating-indoor unit or (b) an oil recovery operation is performed by opening expansion valves corresponding to all of the plurality of indoor units, and
determining whether an operating rate of the indoor units is equal to or higher than a threshold, when the oil level of the compressor is determined to be decreased, wherein the operating rate is a ratio of a total capacity of the at least one operating indoor unit to a total capacity of all of the plurality of indoor units connected to the outdoor unit via the refrigerant pipe;
performing the oil recovery operation by opening the expansion valve corresponding to only the at least one operating indoor unit, when the operating rate of the plurality of indoor units is determined to be equal to or higher than the threshold; and
performing the oil recovery operation by opening the expansion valves corresponding to all of the plurality of indoor units, when the operating rate of the plurality of indoor units is determined to be lower than the threshold.

In one embodiment of the present invention, the threshold is between 20% and 40%.

In one embodiment of the present invention, the method further comprises the step of:
performing the oil recovery operation by opening expansion valves corresponding to all of the plurality of indoor units, when the oil level of the compressor is determined to be decreased for a second or subsequent time.

An air conditioning apparatus according to the invention is defined in independent claim 4.

### BRIEF DESCRIPTION OF DRAWINGS

Fig. 1 is a configuration diagram illustrating an air conditioning apparatus according to the invention.
Fig. 2 is a flowchart illustrating the main control processing to be executed by an outdoor unit controller.
Fig. 3 is a flowchart illustrating the oil recovery operation to be executed by the outdoor unit controller.

### DETAILED DESCRIPTION

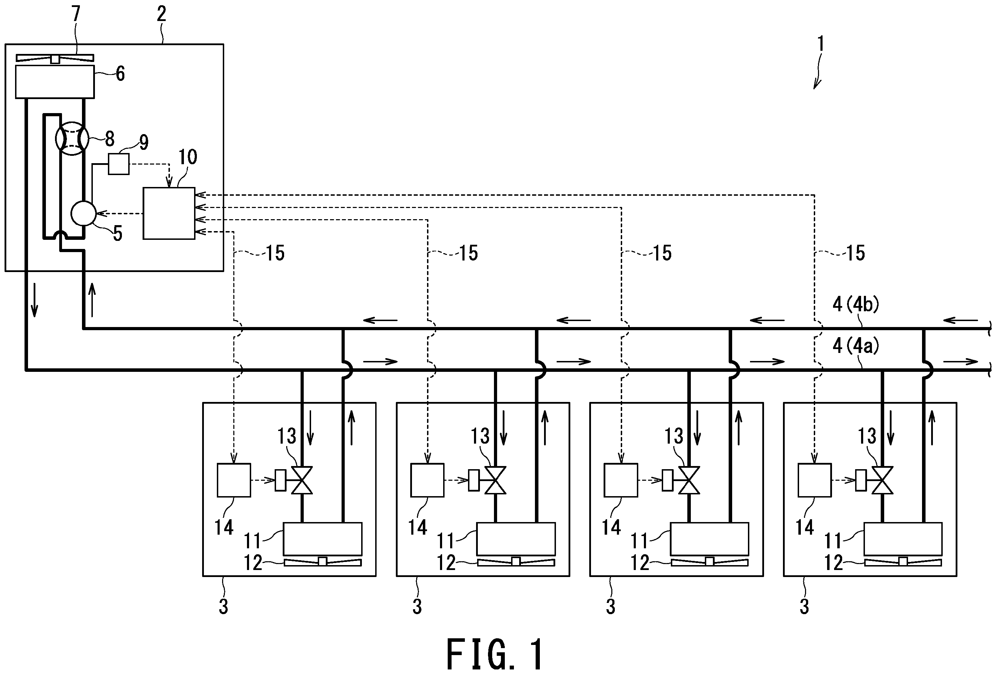

A description will now be given of embodiments of an air conditioning apparatus and its control method in detail by referring to the accompanying drawings. The reference sign 1 in Fig. 1 denotes an air conditioning apparatus. This air conditioning apparatus 1 includes an outdoor unit 2 and a plurality of indoor units 3.

In the air conditioning apparatus 1 of the present embodiment, the plurality of indoor units 3 are connected to one outdoor unit 2. The outdoor unit 2 is installed outdoors. The indoor units 3 are installed in the respective rooms such that each indoor unit 3 performs air conditioning of the room where it is installed.

The outdoor unit 2 and the plurality of indoor units 3 are connected via refrigerant pipes 4 for circulating a refrigerant. A refrigeration cycle is configured by circulating the refrigerant between the outdoor unit 2 and the plurality of indoor units 3.

In the present embodiment, the flow of the refrigerant during the cooling operation is illustrated. The refrigerant pipe 4 for flowing the refrigerant from the outdoor unit 2 to the indoor units 3 is defined as a liquid-side pipe 4a, and the refrigerant pipe 4 for flowing the refrigerant from the indoor units 3 to the outdoor unit 2 is defined as a gas-side pipe 4b.

Although only four indoor units 3 are illustrated in Fig. 1, five or more indoor units 3 are connected to one outdoor unit 2 via the refrigerant pipes 4.

The outdoor unit 2 includes: a compressor 5 configured to compress the refrigerant; an outdoor heat-exchanger 6 configured to exchange heat between the refrigerant and outdoor air; an outdoor fan 7 configured to send wind to the outdoor heat-exchanger 6; a four-way valve 8 configured to switch the direction of refrigerant flow between the cooling operation and the heating operation; an oil-level detection circuit 9 configured to detect amount of oil, which is used for lubrication of the compressor 5; and an outdoor-unit controller 10 configured to control the outdoor unit 2. Note that the outdoor unit 2 may include other devices.

Each indoor unit 3 includes: an indoor heat-exchanger 11 configured to exchange heat between the refrigerant and the indoor air; an indoor fan 12 configured to send air to the indoor heat-exchanger 11 and blow the air into the room to be air-conditioned; an electric expansion valve 13 configured to expand the refrigerant; and an indoor-unit controller 14 configured to control the indoor unit 3. A remote controller, which is used for operating the indoor unit 3 by an user, and a temperature sensor, which is used for detecting the room temperature, are connected to the indoor-unit controller 14.

The operation or stop of each indoor unit 3 can be individually controlled. The operation or stop of each indoor unit 3 is controlled by the user's remote control operation. When the detected value of the temperature sensor has not reached the target temperature, the indoor unit 3 is operated. When the detection value of the temperature sensor has reached the target temperature, the indoor unit 3 is stopped. Such control is executed by each indoor-unit controller 14 or each outdoor-unit controller 10.

In the present embodiment, a control method during the cooling operation will be described. During the cooling operation, the refrigerant is discharged as a high-temperature and high-pressure gas from the compressor 5 of the outdoor unit 2 and flows to the outdoor heat-exchanger 6. The refrigerant exchanges heat with the outdoor air in the outdoor heat-exchanger 6 so as to be condensed, and becomes liquid and flows to the liquid-side pipe 4a. Further, in each indoor unit 3, the liquid refrigerant flows from the liquid-side pipe 4a into the indoor heat-exchanger 11 through the electric expansion valve 13. In the indoor heat-exchanger 11, the liquid refrigerant exchanges heat with the air in the room to be air-conditioned such that the liquid refrigerant evaporates and is gasified.

The gaseous refrigerant discharged from the indoor heat-exchanger 11 of each indoor unit 3 flows to the gas-side pipe 4b. Further, the gaseous refrigerant is compressed by the compressor 5 of the outdoor unit 2 so as to be brought into a high-temperature and high-pressure gaseous state, and then is discharged from the compressor 5 again.

Note that the air conditioning apparatus 1 can also perform the heating operation. During the heating operation, the four-way valve 8 is switched, and the flow of the refrigerant flowing through the refrigerant pipes 4 is reversed. During the cooling operation, the outdoor heat-exchanger 6 of the outdoor unit 2 serves as a condenser and the indoor heat-exchanger 11 of each indoor unit 3 serves as an evaporator. During the heating operation, the outdoor heat-exchanger 6 of the outdoor unit 2 serves as an evaporator, and the indoor heat-exchanger 11 of each indoor unit 3 serves as a condenser.

The outdoor-unit controller 10 is connected to the respective indoor-unit controllers 14 via communication lines 15. Indoor units 3 may include at least one non-operating indoor unit 3 that is stopped (i.e., not in operation) and at least one operating indoor unit 3 that is in operation. Each indoor-unit controller 14 transmits an operating state signal to the outdoor-unit controller 10, and this operating state signal indicates whether the corresponding indoor unit 3 is in operation or stopped. When the indoor unit 3 is in operation, control of opening the electric expansion valve 13 is performed. When the indoor unit 3 is stopped, control of closing the electric expansion valve 13 is performed.

The compressor 5 of the outdoor unit 2 is provided with: a compression mechanism for compressing the gaseous refrigerant; and a motor for driving the compression mechanism. Lubricating oil for smoothly driving the compression mechanism is sealed inside the compressor 5. This oil is discharged from the compressor 5 together with the refrigerant and flows out along the refrigerant pipes 4 in some cases. Although the oil flows with the liquid refrigerant, if the refrigerant becomes gaseous in the indoor units 3, the oil does not flow with the refrigerant, and adheres, in particular, to the inner peripheral surface of the gas-side pipe 4b, and stays there. If such a state continues, there is a possibility that the oil level of the compressor 5 decreases to cause a problem.

For this reason, the air conditioning apparatus 1 detects the height of the oil level inside the compressor 5 at regular intervals by using the oil-level detection circuit 9, and executes the oil recovery operation when the oil level is decreased. During the oil recovery operation, a so-called liquid back operation is performed. In the liquid back operation, the electric expansion valves 13 of the indoor units 3 are controlled such that the liquid refrigerant is returned to the compressor 5 in a liquid state without being gasified. When the liquid back operation is performed, the liquid refrigerant passes through the gas-side pipe 4b. Thus, the oil attached to the inner peripheral surface of the gas-side pipe 4b flows to the compressor 5 together with the refrigerant. In this manner, the oil can be recovered.

The liquid back operation is an operation in which the opening of the electric expansion valves 13 of the indoor units 3 is made larger than the opening of the superheat control, which is performed in the normal operation, and the liquid refrigerant is allowed to flow into the gas-side pipe 4b in the liquid state without being gasified.

When the oil recovery operation is performed, the electric expansion valves 13 of the indoor units 3 are opened and the refrigerant flows, so that noise is generated. In particular, if noise is suddenly generated from a quiet indoor unit 3 in the stopped state, the noise will be annoying.

The air conditioning apparatus 1 of the present embodiment can perform two types of oil recovery operation including a "partially-open oil-recovery-operation" and a "fully-open oil-recovery-operation". In the partially-open oil-recovery-operation, the oil recovery operation is performed by opening the electric expansion valve(s) 13 corresponding to only the indoor unit(s) 3 in operation. In the fully-open oil-recovery-operation, the oil recovery operation is performed by opening the electric expansion valves 13 corresponding to all the indoor units 3.

In the partially-open oil-recovery-operation, oil is returned without using the stopped indoor unit(s) 3, and thus no noise is generated from the stopped indoor unit(s) 3. In the fully-open oil-recovery-operation, noise is generated from all the indoor units 3 including the stopped indoor units 3. However, when switching between the fully-open oil-recovery-operation and the partially-open oil-recovery-operation is appropriately performed depending on the operating rate of the indoor units 3, the frequency at which the fully-open oil-recovery-operation is performed (i.e., frequency at which noise is generated from each stopped indoor unit) can be reduced.

In the present embodiment, when the operating rate of the indoor units 3 at the time of detecting decrease in oil level of the compressor 5 by using the oil-level detection circuit 9 is equal to or higher than a predetermined threshold (value), the oil recovery operation is performed by using only the indoor unit(s) 3 that is/are in operation. Conversely, when the operating rate of the indoor units 3 at the time of detecting decrease in oil level of the compressor 5 by using the oil-level detection circuit 9 is lower than the predetermined threshold, the oil recovery operation is performed by using all the indoor units 3, i.e., the stopped indoor units 3 are also operated to be used for the oil recovery operation. This method reduces the frequency of opening the electric expansion valve 13 of each stopped indoor unit 3 during the oil recovery operation.

In the present embodiment, at the timing when decrease in oil level of the compressor 5 is detected by the oil-level detection circuit 9, it is determined whether the oil recovery operation is performed by opening the electric expansion valve(s) 13 corresponding to only the indoor unit(s) 3 in operation or by opening the electric expansion valves 13 corresponding to all the indoor units 3. In this determination, the threshold set in advance is used.

In the present embodiment, the threshold is set to 30%. In this manner, the determination processing can be performed on the basis of the threshold, and thus it becomes easy to determine whether the oil recovery operation is performed by using only the indoor unit(s) 3 in operation or by using all the indoor units 3.

The operating rate of the indoor units 3 is the ratio of the total capacity of the indoor unit(s) 3 in operation to the total capacity of all the indoor units 3 connected to the outdoor unit 2 via the refrigerant pipes 4. In this manner, the operating rate of the indoor units 3 at the time of returning the oil to the compressor 5 can be set by the operating rate in accordance with the total capacity of the indoor units 3.

The capacity of each indoor units 3 of the present embodiment is set by using at least one of the size of the indoor heat-exchanger 11 and the output of the indoor fan 12. This capacity may be defined as a power, and the unit of capacity may be denoted in kilowatts. The capacity in accordance with each indoor unit 3 is preset depending on the size of the indoor heat-exchanger 11 and the output of the indoor fan 12 at the time of designing each indoor unit 3.

In the present embodiment, the indoor units 3 may be different in capacity from each other or the capacity of every indoor unit 3 may be the same. The operating rate is calculated by the following expression depending on the capacity of each indoor unit 3. Here, the total capacity is the combined capacities of the individual indoor units 3. operating rate[%] = (total capacity of indoor units in operation ÷ total capacity of all the indoor units) × 100

For example, when ten indoor units 3 with capacity of 1 kilowatt are provided, the total capacity of all the indoor units 3 is 10 kilowatts. Under this, when there are three indoor units 3 in operation, their total capacity is 3 kilowatts. That is, if three or more indoor units 3 of all the ten indoor units 3 are in operation, the operating rate becomes 30% or more.

In the case where the operating rate of the indoor units 3 is 30% or more, even when the oil recovery operation is performed by using only the indoor units 3 in operation, a sufficient amount of oil can be recovered, and the oil level of the compressor 5 can be restored by one oil recovery operation. By contrast, in the case where the operating rate of the indoor units 3 is less than 30%, a sufficient amount of oil may not be recovered by one oil recovery operation in some cases.

Thus, in the present embodiment, at the timing when the oil level is decreased, it is determined whether the oil recovery operation is performed by opening the electric expansion valve (s) 13 corresponding to only the indoor unit(s) 3 in operation or by opening the electric expansion valves 13 corresponding to all the indoor units 3, and the oil recovery operation is performed in accordance with this determination result.

The outdoor-unit controller 10 is provided with a memory that stores the capacity of each of the indoor units 3 connected to the outdoor unit 2. When a new indoor unit 3 is connected to the outdoor unit 2 and when an old indoor unit 3 is removed, the information stored in the memory is also updated.

The outdoor-unit controller 10 can calculate the operating rate of the indoor units 3 on the basis of the operating state signal received from the indoor-unit controller 14. The indoor unit(s) 3 in operation is/are identified on the basis of the operation state signal. Then, the total capacity of the indoor units 3 in operation is calculated by referring to the memory. Note that the total capacity of all the indoor units 3 has been calculated in advance. Thus, the operating rate can be calculated by calculating the ratio of the total capacity of the indoor units 3 in operation to the total capacity of all the indoor units 3.

As to whether each indoor unit 3 is in the operation sate or in the stopped state, this state is based on the mode of opening/closing of the electric expansion valve 13. The operation state or stopped state of each indoor units 3 may be indicated on the basis of the ON/OFF state of the power supply of the indoor unit 3.

In the present embodiment, when it is determined that the oil level of the compressor 5 is decreased for the first time, it is determined whether the oil recovery operation is performed by opening the electric expansion valve(s) 13 corresponding to only the indoor unit(s) 3 in operation or by opening the electric expansion valves 13 corresponding to all the indoor units 3, and the oil recovery operation is performed in accordance with this determination result.

When it is determined for the second or subsequent time that the oil level of the compressor 5 is decreased, the oil recovery operation is performed by opening the electric expansion valves 13 corresponding to all the indoor units 3. In other words, when it is determined for the second or subsequent time that the oil level of the compressor 5 is decreased, determination on the operating rate of indoor units 3 is not performed.

When the partially-open oil-recovery-operation is performed as the first oil recovery operation and this partially-open oil-recovery-operation fails to return a sufficient amount of oil to the compressor 5, the second and subsequent oil recovery operations are always performed as the fully-open oil-recovery-operation. In this manner, even when a sufficient amount of oil is not returned to the compressor 5 in the first oil recovery operation, a sufficient amount of oil can be returned to the compressor 5 in the second and subsequent oil recovery operations.

In the present embodiment, when the decrease in the oil level of the compressor 5 is detected after detecting the decrease in the oil level of the compressor 5 four times, the outdoor-unit controller 10 restarts the outdoor unit 2. When the decrease in the oil level of the compressor 5 is detected for the first time after the restart, this detection is treated as detection of decrease in oil level for the first time. In other words, when a sufficient oil is not returned to the compressor 5 even after performing the oil recovery operation four times, the outdoor unit 2 is restarted.

Although the outdoor unit 2 is restarted in the present embodiment on the condition that the decrease in oil level is detected four times, this condition may be changed. For example, even when the detection of the decrease in oil level is three times or less, the restart of the outdoor unit 2 may be performed. Additionally or alternatively, the outdoor unit 2 may be restarted on the condition that the detection of the decrease in oil level is five times or more. This condition of number of detection times is appropriately set depending on the configuration of the outdoor unit 2 or the number of installed compressors 5.

Further, in the present embodiment, when the decrease in oil level of the compressor 5 is further detected after restarting the outdoor unit 2 four times, the outdoor-unit controller 10 outputs a failure alert indicating that the outdoor unit 2 is in failure. In other words, the failure alert is outputted when a sufficient amount of oil is not returned to the compressor 5 even after restarting the outdoor unit 2 four times.

Although the failure alert is outputted in the present embodiment on the condition that the outdoor unit 2 is restarted four times, this condition may be changed. For example, even when the number of restarting the outdoor unit 2 is three times or less, the failure alert may be outputted. Additionally or alternatively, the failure alert may be outputted on the condition that the number of restarting the outdoor unit 2 is five times or more. This condition of number of restart times is appropriately set depending on the configuration of the outdoor unit 2 or the number of installed compressors 5.

Although the threshold of the oil-level detection is set to 30% in the present embodiment, another threshold may be used. For example, the threshold may be 20%, 25%, 35%, or 40%.

Experiments were performed by using various air conditioning apparatus 1 under various installation environments. As the result of the experiments, in the case of performing the oil recovery operation by using only the indoor units 3 in operation, it has been found that the oil can be sufficiently recovered when the operating rate of the indoor units 3 is 20% or more. Further, it has been found that the ability to recover oil is significantly enhanced when the operating rate of the indoor units 3 is 30% or more. Moreover, it has been found that oil can be recovered by one oil recovery operation regardless of installation environments and specifications of the air conditioning apparatus 1 when the operating rate of the indoor units 3 is 40% or more.

When the threshold is a low value, the frequency of operating the stopped indoor unit(s) 3 during the first oil recovery operation decreases but the frequency of performing the second and subsequent oil recovery operations increases. When the threshold is a high value, the frequency of operating the stopped indoor unit(s) 3 during the first oil recovery operation increases but the frequency of performing the second and subsequent oil recovery operations decreases. Comprehensively considering the frequency of operation of the indoor units 3 and the frequency of oil recovery operation, it has been found from the experimental results that the threshold is preferably 30%. It is sufficient that the threshold is in the range of 20% to 40%. It is preferred that the threshold is in the range of 25% to 35%.

The outdoor-unit controller 10 and the indoor-unit controller 14 of the present embodiment includes hardware resources such as a processor and a memory and is configured as a computer in which information processing by software is achieved with the use of the hardware resources by causing the CPU to execute various programs. Further, the method for controlling an air conditioning apparatus of the present embodiment is achieved by causing the computer to execute the various programs.

Each of the outdoor-unit controller 10 and the indoor-unit controller 14 includes a non-volatile memory. The non-volatile memory is a memory that can retain the stored data regardless of interruption of power supply. The non-volatile memory is configured by a device such as an EEPROM or a flash ROM.

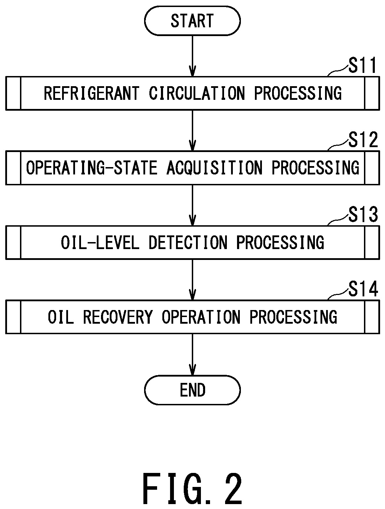

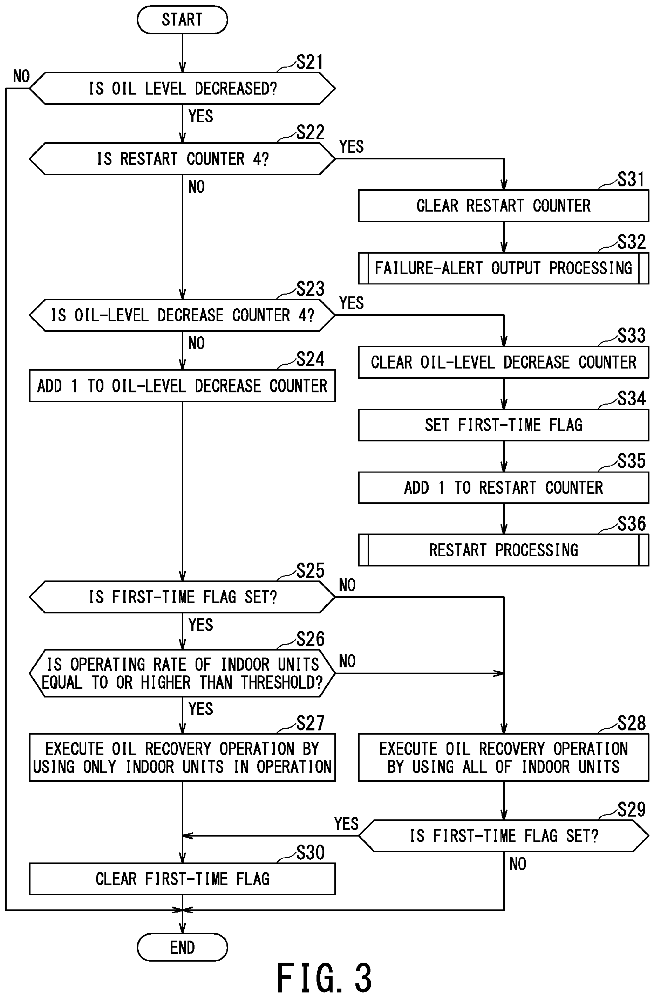

Next, a description will be given of the main processing and the oil recovery operation processing to be executed by the outdoor-unit controller 10, on the basis of the respective flowcharts of Fig. 2 and Fig. 3 by referring to the configuration diagram of Fig. 1 as required.

Each of the main processing and the oil recovery operation processing is repeated at regular intervals. The method for controlling an air conditioning apparatus is executed by repeating the above-described processing. Note that above-described processing may be performed by interrupt processing while the outdoor-unit controller 10 is executing other processing.

In the main control processing as shown in Fig. 2, in the first step S11, the outdoor-unit controller 10 executes refrigerant circulation processing (i.e., cooling operation) in which the refrigerant is circulated between the outdoor unit 2 and the plurality of indoor units 3 via the refrigerant pipes 4.

In the next step S12, the outdoor-unit controller 10 executes operating-state acquisition processing for acquiring the operating state of each indoor unit 3 on the basis of the operating state signal received from the indoor-unit controller 14.

In the next step S13, the outdoor-unit controller 10 uses the oil-level detection circuit 9 to execute oil-level detection processing for detecting the oil level of the compressor 5.

In the next step S14, the outdoor-unit controller 10 executes oil recovery operation processing for performing an oil recovery operation when the oil level of the compressor 5 is reduced. Afterward, the processing is completed.

In the oil recovery operation processing as shown in Fig. 3, in the first step S21, the outdoor-unit controller 10 determines whether the oil level of the compressor 5 is decreased or not, on the basis of the oil level detected by the oil-level detection circuit 9. If the oil level is not decreased (NO in the step S21), the processing is completed. If the oil level is decreased (YES in the step S21), the processing proceeds to the step S22.

In the next step S22, the outdoor-unit controller 10 determines whether a value of a restart counter for counting the number of restarts of the outdoor unit 2 is "4" or not. If the value of the restart counter is "4" (YES in the step S22), the processing proceeds to the step S31. If the value of the restart counter is not "4" (NO in the step S22), the processing proceeds to the step S23.

In the next step S23, the outdoor-unit controller 10 determines whether a value of an oil-level decrease counter is "4" or not. Here, the oil-level decrease counter is a counter for counting the number of times the oil level of the compressor 5 has been decreased. If the value of the oil-level decrease counter is "4" (YES in the step S23), the processing proceeds to the step S33. If the value of the oil-level decrease counter is not "4" (NO in the step S23), the processing proceeds to the step S24.

In the next step S24, the outdoor-unit controller 10 adds "1" to the value of the oil-level decrease counter.

In the next step S25, the outdoor-unit controller 10 determines whether a first-time flag, which indicates that the oil level of the compressor 5 is decreased for the first time, is set or not. This "first time" indicates the first time after the outdoor unit 2 is restarted. If the first-time flag is not set (NO in the step S25), the processing proceeds to the step S28. If the first-time flag is set (YES in the step S25), the processing proceeds to the step S26.

In the next step S26, the outdoor-unit controller 10 determines whether the operating rate of the indoor units 3 is equal to or higher than a threshold. If the operating rate of the indoor units 3 is equal to or higher than the threshold (YES in the step S26), the processing proceeds to the step S27. If the operating rate of the indoor units 3 is lower than the threshold (NO in the step S26), the processing proceeds to the step S28.

In the next step S27, the outdoor-unit controller 10 executes the partially-open oil-recovery-operation by opening the electric expansion valve (s) corresponding to only the indoor unit(s) 3 in operation. Afterward, the processing proceeds to the step S30.

In the next step S28, the outdoor-unit controller 10 executes the fully-open oil-recovery-operation by opening the electric expansion valves 13 corresponding to all the indoor units 3 including the stopped indoor unit(s) 3. Afterward, the processing proceeds to the step S29.

In the next step S29, the outdoor-unit controller 10 determines whether the first-time flag is set or not. If the first-time flag is not set (NO in the step S29), the processing is completed. If the first-time flag is set (YES in the step S29), the processing proceeds to the step S30.

In the next step S30, the outdoor-unit controller 10 clears the first-time flag and completes the processing.

In the step S31, which is executed if the determination result in the step S22 is YES, the outdoor-unit controller 10 clears the restart counter.

In the next step S32, the outdoor-unit controller 10 executes failure-alert output processing for outputting a failure alert indicating that the outdoor unit 2 is in failure.

In the step S33, which is executed if the determination result in the step S23 is YES, the outdoor-unit controller 10 clears the oil-level decrease counter.

In the next step S34, the outdoor-unit controller 10 sets the first-time flag.

In the next step S35, the outdoor-unit controller 10 adds "1" to the value of the restart counter.

In the next step S36, the outdoor-unit controller 10 executes restart processing for restarting the outdoor unit 2.

In the present embodiment, the determination of one value using a reference value (i.e., threshold value) may be determination of whether the target value is equal to or larger than the reference value or not. Additionally or alternatively, the determination of the target value using the reference value may be determination of whether the target value exceeds the reference value or not. Additionally or alternatively, the determination of the target value using the reference value may be determination of whether the target value is equal to or smaller than the reference value or not. Additionally or alternatively, the determination of the one value using the reference value may be determination of whether the target value is smaller than the reference value or not. Additionally or alternatively, the reference value is not necessarily fixed and the reference value may be changed. Thus, a predetermined range of values may be used instead of the reference value, and the determination of the target value may be determination of whether the target value is within the predetermined range or not. In addition, an error occurring in the apparatus may be analyzed in advance, and a predetermined range including the error range centered on the reference value may be used for determination.

Although a mode in which each step is executed in series is illustrated in the flowcharts of the present embodiment, the execution order of the respective steps is not necessarily fixed and the execution order of part of the steps may be changed. Additionally, some steps may be executed in parallel with another step.

Note that each program executed in the controller of the present embodiment is provided by being incorporated in a memory such as a ROM in advance. Additionally or alternatively, each program may be provided by being stored as a file of installable or executable format in a non-transitory computer-readable storage medium such as a CD-ROM, a CD-R, a memory card, a DVD, and a flexible disk (FD).

In addition, each program executed in the controller may be stored on a computer connected to a network such as the Internet and be provided by being downloaded via a network. Further, the controller can also be configured by interconnecting and combining separate modules, which independently exhibit respective functions of the components, via a network or a dedicated line.

Although the electric expansion valves 13 are provided in the indoor units 3 in the present embodiment, the electric expansion valves 13 corresponding to the respective indoor units 3 may be provided in the outdoor unit 2. The electric expansion valves may be provided in both of the outdoor unit 2 and the indoor units 3.

Although the operating rate corresponding to the capacity of the indoor units 3 is acquired in the present embodiment, the operating rate corresponding to the number of the indoor units 3 may be acquired.

In the present embodiment, when decrease in oil level is determined for the second or subsequent time, the determination of the operating rate of the indoor units 3 is not performed. However, even when decrease in oil level is determined for the second or subsequent time, it may be determined whether the oil recovery operation is performed by opening the electric expansion valve(s) 13 corresponding to only operating indoor unit(s) 3 in operation or by opening the electric expansion valves 13 corresponding to all the indoor units 3, so that the oil recovery operation is performed in accordance with this determination result.

In the present embodiment, in the case where the oil level of the compressor 5 is decreased, the partially-open oil-recovery-operation is performed when the operating rate of indoor units 3 is 30% or more, and the fully-open oil-recovery-operation is performed when the operating rate of indoor units 3 is less than 30%. However, condition of performing the oil recovery operation may be changed. For example, when the operating rate of the indoor units 3 is less than 30%, the oil recovery operation may be performed by opening only the electric expansion valves 13 corresponding to some of the indoor units 3 (i.e., the electric expansion valves 13 corresponding to the rest of the indoor units 3 are not opened). In this case, the ratio of the total capacity of the indoor units 3, in each of which the electric expansion valve 13 is opened, is controlled so as to become 30% or more of the total capacity of all the indoor units 3.

In the case of performing the partially-open oil-recovery-operation, the air conditioning apparatus 1 may be configured to open the electric expansion valve 13 of the indoor unit 3 farthest from the outdoor unit 2 and at the end of the refrigerant pipes 4 when this indoor unit 3 is stopped. In this case, the liquid refrigerant returns from the indoor units 3 at the end of the refrigerant pipes 4, the oil adhering to the inner peripheral surface of the refrigerant pipes 4 can be efficiently returned.

A plurality of outdoor units 2 sharing the refrigerant pipes 4 with each other may be provided and a plurality of indoor units 3 may be connected to these outdoor units 2. Further, two or more compressors 5 may be provided in the outdoor unit 2 in parallel.

The above-described embodiments include the step of determining whether the oil recovery operation is performed by opening the expansion valve corresponding to each indoor unit in operation or by opening the expansion valves corresponding to all the indoor units, and thus the frequency of generating noise from the stopped indoor unit(s) can be reduced during the oil recovery operation.

### REFERENCE SIGNS LIST

- 1: air conditioning apparatus
- 2: outdoor unit
- 3: indoor unit
- 4: refrigerant pipe
- 5: compressor
- 6: outdoor heat-exchanger
- 7: outdoor fan
- 8: four-way valve
- 9: oil-level detection circuit
- 10: outdoor-unit controller
- 11: indoor heat-exchanger
- 12: indoor fan
- 13: electric expansion valve
- 14: indoor-unit controller
- 15: communication line

## Claims

1. A method for controlling an air conditioning apparatus comprising steps of:
circulating a refrigerant between an outdoor unit (2) and a plurality of indoor units (3) via a refrigerant pipe (4), the plurality of indoor units (3) including at least one non-operating indoor unit (3) that is not in operation and at least one operating indoor unit (3) that is in operation;
acquiring an operating state of each of the plurality of indoor units (3);
determining whether oil level of a compressor (5) of the outdoor unit (2) is decreased or not; and
determining, when the oil level of the compressor (5) is determined to be decreased, whether (a) an oil recovery operation is performed by opening an expansion valve (13) corresponding to only the at least one operating-indoor unit (3) or (b) an oil recovery operation is performed by opening expansion valves (13) corresponding to all of the plurality of indoor units (3), **characterised in that** the method further comprises the steps of
determining whether an operating rate of the indoor units (3) is equal to or higher than a threshold, when the oil level of the compressor (5) determined to be decreased, wherein the operating rate is a ratio of a total capacity of the at least one operating indoor unit (3) to a total capacity of all of the plurality of indoor units (3) connected to the outdoor unit (2) via the refrigerant pipe (4);
performing the oil recovery operation by opening the expansion valve corresponding to only the at least one operating indoor unit (3), when the operating rate of the plurality of indoor units (3) is determined to be equal to or higher than the threshold; and
performing the oil recovery operation by opening the expansion valves (13) corresponding to all of the plurality of indoor units (3), when the operating rate of the plurality of indoor units (3) is determined to be lower than the threshold.

2. The method according to claim 1, **characterised in that** the threshold is between 20% and 40%.

3. The method according to claim 1, **characterised in that** it further comprises the step of:
performing the oil recovery operation by opening expansion valves (13) corresponding to all of the plurality of indoor units (3), when the oil level of the compressor (5) is determined to be decreased for a second or subsequent time.

4. An air conditioning apparatus comprising:
an outdoor unit (2);
a plurality of indoor units (3) including at least one non-operating indoor unit (3) that is not in operation and at least one operating indoor unit (3) that is in operation;
a refrigerant pipe (4) configured to circulate a refrigerant between the outdoor unit (2) and the plurality of indoor units (3);
a compressor (5) configured to compress the refrigerant;
an oil-level detection circuit (9) configured to detect oil level of the compressor (5);
a plurality of expansion valves (13) respectively corresponding to the plurality of indoor units (3); and
a controller (14) configured to
acquire an operating state of each of the plurality of indoor units (3);
determine whether the oil level of the compressor (5) is decreased or not, based on detection by the oil-level detection circuit (9), and
determine, when the oil level of the compressor (5) is determined to be decreased, whether (a) an oil recovery operation is performed by opening an expansion valve (13) corresponding to only the at least one operating indoor unit (3) or (b) an oil recovery operation is performed by opening expansion valves (13) corresponding to all of the plurality of indoor units (3), **characterised in that** the controller is configured to
determine whether an operating rate of the indoor units (3) is equal to or higher than a threshold, when the oil level of the compressor (5) is determined to be decreased, wherein the operating rate is a ratio of a total capacity of the at least one operating indoor unit (3) to a total capacity of all of the plurality of indoor units (3) connected to the outdoor unit (2) via the refrigerant pipe (4);
perform the oil recovery operation by opening an expansion valve (13) corresponding to only the at least one operating indoor unit, when the operating rate of the plurality of indoor units (3) is determined to be equal to or higher than the threshold; and
perform the oil recovery operation by opening expansion valves (13) corresponding to all of the plurality of indoor units (3), when the operating rate of the plurality of indoor units (3) is determined to be lower than the threshold.

## Patentansprüche

1. Ein Verfahren zur Steuerung einer Klimaanlage, umfassend die Schritte:
Zirkulieren eines Kältemittels zwischen einer Außeneinheit (2) und einer Vielzahl von Inneneinheiten (3) über eine Kältemittelleitung (4), wobei die Vielzahl von Inneneinheiten (3) mindestens eine nicht arbeitende Inneneinheit (3), die nicht in Betrieb ist, und mindestens eine arbeitende Inneneinheit (3), die in Betrieb ist, umfassen;
Erfassen eines Betriebszustands von jeder der mehreren Inneneinheiten (3);
Feststellen, ob der Ölstand eines Kompressors (5) der Außeneinheit (2) gesunken ist oder nicht; und
Bestimmen, wenn der Ölstand des Kompressors (5) bestimmt ist abgesenkt zu werden, ob (a) ein Ölrückgewinnungsvorgang durch Öffnen eines Expansionsventils (13) durchgeführt wird, das nur der mindestens einen in Betrieb befindlichen Inneneinheit (3) entspricht, oder (b) ein Ölrückgewinnungsvorgang durch Öffnen von Expansionsventilen (13) durchgeführt wird, die allen der Vielzahl von Inneneinheiten (3) entspricht, **dadurch gekennzeichnet, dass** das Verfahren ferner die folgenden Schritte umfasst
Bestimmen, ob eine Betriebsrate der Inneneinheiten (3) gleich oder höher als ein Schwellenwert ist, wenn der Ölstand des Kompressors (5) bestimmt ist abgesenkt zu werden, wobei die Betriebsrate ein Verhältnis einer Gesamtkapazität der mindestens einen in Betrieb befindlichen Inneneinheit (3) zu einer Gesamtkapazität aller der Vielzahl von Inneneinheiten (3) ist, die über die Kältemittelleitung (4) mit der Außeneinheit (2) verbunden sind;
Durchführen des Ölrückgewinnungsvorgangs durch Öffnen des Expansionsventils, das nur der mindestens einen in Betrieb befindlichen Inneneinheit (3) entspricht, wenn festgestellt wird, dass die Betriebsrate der mehreren Inneneinheiten (3) gleich oder höher als der Schwellenwert ist; und
Durchführen des Ölrückgewinnungsvorgangs durch Öffnen der Expansionsventile (13) entsprechend allen der Vielzahl von Inneneinheiten (3), wenn die Betriebsrate der mehreren Innenraumeinheiten (3) niedriger als der Schwellenwert ist.

2. Das Verfahren nach Anspruch 1, **dadurch gekennzeichnet, dass** der Schwellenwert zwischen 20 % und 40 % liegt.

3. Das Verfahren nach Anspruch 1, **dadurch gekennzeichnet, dass** es ferner den folgenden Schritt umfasst
Durchführen des Ölrückgewinnungsvorgangs durch Öffnen von Expansionsventilen (13) entsprechend allen der Vielzahl an Inneneinheiten (3), wenn der Ölstand des Kompressors (5) festgelegt ist zum Absenken für ein zweites oder nachfolgendes Mal.

4. Eine Klimatisierungsvorrichtung, die Folgendes umfasst
ein Außengerät (2);
eine Vielzahl von Inneneinheiten (3), einschließlich mindestens einer nicht in Betrieb befindlichen Inneneinheit (3) und mindestens einer in Betrieb befindlichen Inneneinheit (3);
eine Kältemittelleitung (4), die ausgebildet ist, ein Kältemittel zwischen der Außeneinheit (2) und der Vielzahl von Inneneinheiten (3) zu zirkulieren;
einen Kompressor (5), der ausgebildet ist, das Kältemittel zu verdichten;
eine Ölstandserfassungsschaltung (9), die ausgebildet ist, den Ölstand des Kompressors (5) zu erfassen;
eine Vielzahl von Expansionsventilen (13), die jeweils der Vielzahl von Inneneinheiten (3) entsprechen; und
eine Steuerung (14), die ausgebildet ist zum,
Erfassen eines Betriebszustands jeder der mehreren Inneneinheiten (3);
Feststellen, ob der Ölstand des Kompressors (5) gesunken ist oder nicht, basierend auf der Erfassung durch die Ölstandserfassungsschaltung (9), und
Bestimmen, wenn festgestellt wird, dass der Ölstand des Kompressors (5) gesunken ist, ob (a) ein Ölrückgewinnungsvorgang durch Öffnen eines Expansionsventils (13) durchgeführt wird, das nur der mindestens einen in Betrieb befindlichen Inneneinheit (3) entspricht, oder (b) ein Ölrückgewinnungsvorgang durch Öffnen von Expansionsventilen (13) durchgeführt wird, der allen der Vielzahl von Inneneinheiten (3) entsprieht, **dadurch gekennzeichnet, dass** die Steuerung ausgebildet ist, um zu
Bestimmen, ob eine Betriebsrate der Inneneinheiten (3) gleich oder höher als ein Schwellenwert ist, wenn der Ölstand des Kompressors (5) bestimmt ist abgesenkt zu werden, , wobei die Betriebsrate ein Verhältnis einer Gesamtkapazität der mindestens einen in Betrieb befindlichen Inneneinheit (3) zu einer Gesamtkapazität aller der Vielzahl von Inneneinheiten (3) ist, die über die Kältemittelleitung (4) mit der Außeneinheit (2) verbunden sind;
Durchführen des Ölrückgewinnungsvorgangs durch Öffnen eines Expansionsventils (13) entsprechend der nur mindestens einen in Betrieb befindlichen Inneneinheit, wenn die Betriebsrate der Vielzahl von Inneneinheiten (3) gleich oder höher als der Schwellenwert ist; und
Durchführen des Ölrückgewinnungsvorgangs durch Öffnen von Expansionsventilen (13) entsprechend zu allen der Vielzahl an Inneneinheiten (3), wenn die Betriebsrate der mehreren Inneneinheiten (3) unter dem Schwellenwert liegt.

## Revendications

1. Procédé de commande d'un appareil de conditionnement d'air comprenant les étapes consistant à :
faire circuler un réfrigérant entre une unité externe (2) et une pluralité d'unités internes (3) via un tube à réfrigérant (4), la pluralité d'unités internes (3) incluant au moins une unité interne non fonctionnelle (3) qui n'est pas en fonctionnement et au moins une unité interne fonctionnelle (3) qui est en fonctionnement ;
acquérir un état de fonctionnement de chacune de la pluralité d'unités internes (3) ;
déterminer si un niveau d'huile d'un compresseur (5) de l'unité externe (2) est réduit ou non ; et
déterminer, quand le niveau d'huile du compresseur (5) est déterminé comme étant réduit, si (a) une opération de récupération d'huile est effectuée en ouvrant une vanne d'expansion (13) correspondant à uniquement ladite au moins une unité interne fonctionnelle (3) ou (b) une opération de récupération d'huile est effectuée en ouvrant des vannes d'expansion (13) correspondant à la totalité de la pluralité d'unités internes (3), **caractérisé en ce que** le procédé comprend en outre les étapes consistant à :
déterminer si un taux de fonctionnement des unités internes (3) est égal ou supérieur à un seuil, quand le niveau d'huile du compresseur (5) est déterminé comme étant réduit, dans lequel le taux de fonctionnement est un rapport d'une capacité totale de ladite au moins une unité interne fonctionnelle (3) sur une capacité totale de la totalité de la pluralité d'unités internes (3) connectées à l'unité externe (2) via le tube à réfrigérant (4) ;
effectuer l'opération de récupération d'huile en ouvrant la vanne d'expansion correspondant à uniquement ladite au moins une unité interne fonctionnelle (3), quand le taux de fonctionnement de la pluralité d'unités internes (3) est déterminé comme étant égal ou supérieur au seuil ; et
effectuer l'opération de récupération d'huile en ouvrant les vannes d'expansion (13) correspondant à la totalité de la pluralité d'unités internes (3), quand le taux de fonctionnement de la pluralité d'unités internes (3) est déterminé comme étant inférieur au seuil.

2. Procédé selon la revendication 1, **caractérisé en ce que** le seuil est entre 20 % et 40 %.

3. Procédé selon la revendication 1, **caractérisé en ce qu'**il comprend en outre l'étape consistant à :
effectuer l'opération de récupération d'huile en ouvrant les vannes d'expansion (13) correspondant à la totalité de la pluralité d'unités internes (3), quand le niveau d'huile du compresseur (5) est déterminé comme étant réduit pendant une seconde période ou une période suivante.

4. Appareil de conditionnement d'air comprenant :
une unité externe (2) ;
une pluralité d'unités internes (3) incluant au moins une unité interne non fonctionnelle (3) qui n'est pas en fonctionnement et au moins une unité interne fonctionnelle (3) qui est en fonctionnement ;
un tube à réfrigérant (4) configuré pour faire circuler un réfrigérant entre l'unité externe (2) et la pluralité d'unités internes (3) ;
un compresseur (5) configuré pour comprimer le réfrigérant ;
un circuit de détection de niveau d'huile (9) configuré pour détecter un niveau d'huile du compresseur (5) ;
une pluralité de vannes d'expansion (13) correspondant respectivement à la pluralité d'unités internes (3) ; et
un contrôleur (14) configuré pour
acquérir un état de fonctionnement de chacune de la pluralité d'unités internes (3) ;
déterminer si le niveau d'huile du compresseur (5) est réduit ou non, sur la base de la détection par le circuit de détection de niveau d'huile (9), et
déterminer, quand le niveau d'huile du compresseur (5) est déterminé comme étant réduit, si (a) une opération de récupération d'huile est effectuée en ouvrant une vanne d'expansion (13) correspondant à uniquement ladite au moins une unité interne fonctionnelle (3) ou (b) une opération de récupération d'huile est effectuée en ouvrant des vannes d'expansion (13) correspondant à la totalité de la pluralité d'unités internes (3), **caractérisé en ce que** le contrôleur est configuré pour déterminer si un taux de fonctionnement des unités internes (3) est égal ou supérieur à un seuil, quand le niveau d'huile du compresseur (5) est déterminé comme étant réduit, dans lequel le taux de fonctionnement est un rapport d'une capacité totale de ladite au moins une unité interne fonctionnelle (3) sur une capacité totale de la totalité de la pluralité d'unités internes (3) connectées à l'unité externe (2) via le tube à réfrigérant (4) ;
effectuer l'opération de récupération d'huile en ouvrant une vanne d'expansion (13) correspondant à uniquement ladite au moins une unité interne fonctionnelle, quand le taux de fonctionnement de la pluralité d'unités internes (3) est déterminé comme étant égal ou supérieur au seuil ;; et
effectuer l'opération de récupération d'huile en ouvrant des vannes d'expansion (13) correspondant à la totalité de la pluralité d'unités internes (3), quand le taux de fonctionnement de la pluralité d'unités internes (3) est déterminé comme étant inférieur au seuil.
